Europäisches Patentamt

European Patent Office

Office européen des brevets

(11) Publication number: **0 427 858 A1**

# EUROPEAN PATENT APPLICATION
## published in accordance with Art. 158(3) EPC

(21) Application number: 90903399.5

(51) Int. Cl.5: **A01N 25/08**

(22) Date of filing: 27.02.90

(86) International application number:
PCT/JP90/00243

(87) International publication number:
WO 90/09736 (07.09.90 90/21)

(30) Priority: 28.02.89 JP 45417/89
28.02.89 JP 49237/89
28.02.89 JP 49238/89
07.04.89 JP 87001/89
07.04.89 JP 187002/89
07.04.89 JP 87003/89
07.04.89 JP 88571/89
17.07.89 JP 82426/89

(43) Date of publication of application:
22.05.91 Bulletin 91/21

(84) Designated Contracting States:
DE FR GB IT

(71) Applicant: KANEBO LTD.
17-4, Sumida 5 chome
Sumida-ku, Tokyo 131(JP)

Applicant: TANAKA KIKINZOKU KOGYO K.K.
6-6, Kayaba-CHO 2-chome, Nihonbashi
Chuo-ku Tokyo 103(JP)

(72) Inventor: MIZUKAMI, Yoshikatsu
Kanebo Ltd. 6-1-408, Tomobuchi-cho
1-chome
Miyakojima-ku Osaka-shi Osaka 534(JP)
Inventor: TAMEMASA, H
T.K.K.K. Hiratsuka Daini Kojyo 2-14, Nagatoro
Hiratsuka-shi Kanagawa-ken 254(JP)
Inventor: ARAI, Masashi
4-1, Kanebo-cho Hofu-shi
Yamaguchi-ken 747(JP)
Inventor: YAMAMOTO, Toshihiro
5-12, Katsuma 2-chome Hofu-shi
Yamaguchi-ken 747(JP)
Inventor: ONAKA, Hidemitsu
2-12, Saba 1-chome Hofu-shi
Yamaguchi-ken 747(JP)

(74) Representative: Wächtershäuser, Günter, Dr.
Tal 29
W-8000 München 2(DE)

(54) ANTIBACTERIAL OR CONDUCTIVE COMPOSITION AND APPLICATIONS THEREOF.

(57) This invention is directed to a particulate composition having antibacterial properties or electric conductivity, a method of producing the same, and applications thereof including impartation of antibacterial properties or electric conductivity to, for example, the filament or film of a synthetic polymer by adding this composition in the course of manufacturing of such filament or film. Conventional materials used for imparting antibacterial properties, such as gold or silver powders, and those used for imparting electric conductivity, such as various metallic or carbon powders, are disadvantageous from the viewpoints of cost and weight because they must be added in considerable quantities in order to exhibit a remarkable effect. The carbon powder is also problematic in an aspect of the color of the product. The composition of the invention is produced by depositing an antibacterial or conductive material known *per se* uniformly on the surface of a minute inorganic particle.

## ANTIBACTERIAL AND ELECTRICALLY CONDUCTIVE COMPOSITION AND APPLICATIONS THEREOF

Technical Field:

The present invention relates to an antibacterial and electrically conductive composition, which may be used as an additive for producing a filament, film, synthetic resin article, paint or the like to give to give a characteristic of bacteria resistance and electrically conductivity.

Also, the present invention relates to a synthetic resin and synthetic fiber per se of good antibacterial properties and of good electrical conductivity, and a method of making such antibacterial and electrically conductive synthetic resins and synthetic fibers.

Background Art, Problems thereon and Objects of the Invention

There are two kinds of conventional additives to provide antibacterial products, that is, organic and inorganic antibacterial additives. A main ingredient for the organic additives is trichlorocarbamide, polyhexamethylenebiguanide hydrochloride, octadecyldimethyl-3-trimethoxysilylpropyl ammonium chloride or the like. On the other hand, a main ingredient for the inorganic additives is copper sulfide, copper, pulverized silver, pulverized copper or the like.

The conventional organic antibacterial additives have somewhat volatility, and therefore, these antibacterial additives will be easily lost in the course of producing antibacterial products to show unstable antibacterial effect. Disadvantageously, when being exposed to high-temperature in the course of production, such antibacterial additives may cause a reaction with a material in a matrix material, thus causing an adverse effect on the nature of the final product.

While the inorganic antibacterial compositions which contain a metallic compound as the main ingredient are used in producing fibers, films and the like, and these antibacterial compositions are contained in dispersed state in final products. Antibacterial metals of the dispersed metallic compounds are liable to be ionized, and ionized antibacterial metals will move to surface of the product to develop antibacterial function.

As one of examples, there is a method, wherein copper sulfide or copper is added into acrylic cotton or yarn in the course of dyeing. This method, however, requires a relatively large number of steps, and a relatively long reaction time. Accordingly the production cost increases.

When the pulverized copper or silver is selected as antibacterial material, these metals are apt to be precipitated in the mixture before completion of products because of their large specific gravity. Therefore, these additives are inconvenient in handling thereof and require the same in large amount, and accordingly, in practice, the production cost increases.

As a relevant prior art reference, there is Jap. Pat. No. Sho 61 - 190536(A) (corresponding to BP 8432728 and 8504482) which discloses a method of coating carrier particles with silver by dispersing the carrier particles in an aqueous solution of silver salt, treating the suspension with sodium hydroxide, and then reducing with use of a reduction agent. However, this method has disadvantage of that at the time of treatment with sodium hydroxide, a major part of silver in the aqueous silver salt solution will be deposited and converted into fine particles of silver oxide, which makes difficult to coat the carrier particles with silver oxide, so that a mixture of the carrier particles coated with silver and silver particles per se shall be prepared. While, Jap. Pat. No. Sho 63 - 88109 (corresponding to BP 8616294) discloses a method wherein carrier particles were dispersed in an aqueous solution of silver salt in a form of slurry, and then silver is deposited on the carrier particles, as the material insoluble to water. According to this method, a reaction is effected by adding sodium chloride to aqueous solution of silver nitrate. The reaction speed, however, is too high, so that it is difficult to coat particles evenly with silver compound. A mixture of the carrier particles coated with silver compound and silver particles per se will be prepared, since the silver particles shall inevitably formed. In such a system containing fine particles of silver in addition to the carrier particles, it is most likely that secondary agglomeration is apt to be caused with such fine particles as core, and therefore coarse particles will result. Accordingly, it may cause such serious disadvantages in practical view point that the product surface will be coarse, and the fluidity of the raw material for shaping will decrease.

Therefore, a primary object of the invention is to provide an antibacterial composition by uniformly and evenly coating surface of carrier particles with an antibacterial metal or compound, whereby a formation of fine particles of metal compound per se can sufficiently be inhibited, a particles size distribution of the carrier particles can be maintained, as it was, a relative amount of the metal can be made low to reduce a

2

specific gravity of the resulting metal coated carrier particles, and it shows a sufficient antibacterial property.

As electrically conductive particles to be added for preparing an electrically conductive fiber article or the like, various fine metal particles, carbon black and the like have been known. Electrically conductive composition with resistivity of about $10^{-2}$ohm cm can be obtained by coating fine particles of titanium oxide with zinc oxide or tin oxide [see Jap. Pat. No. Hei 1 - 22365(B)].

However, the use of metal particles as electrically conductive additives increases the cost of product, and still disadvantageously the specific gravity of the particle additive is so large that undesired deposition of particle additive may be caused when mixing such heavy additive with mold matrix material, due to the difference in specific gravity between the metal particles and the matrix material. Use of carbon black as electrically conductive material causes a such a problem in utilization that it can provide black molded articles, only. The coating of zinc oxide or tin oxide on metal particles will provide hard particles because such coating materials belong into a ceramic group, and it gives high wear to travelers and the like, when filaments containing such composite particles are subjected to drafting to make make into a synthetic fiber with electric conductivity.

Therefore, a secondary object of the invention is to provide an electrically conductive composition in a form of shaped product containing an electric conductive material, which has a desired color, can easily be prepared, shows good electric conductivity, and can be prepared at a reasonable cost.

Turning to synthetic polymers, those have been employed in various uses by shaping same into fiber, film, sheet and the like. For instance, the synthetic fiber may be widely used to provide clothing, bed articles and others. Recently, there has been an increasing demand for bacteria-resistant and/or mildewproofing carpets or mats from the point of sanitary view.

It has been known to apply on a natural or synthetic fiber, an antibacterial and/or mildewproofing compound, or immerse the fiber in a solution containing the compound. However, the articles treated with such methods will easily lose the antibacterial and/or mildewproofing effect, namely the treating agent in the clothing will be easily lost by washing. In an attempt to improve the anti-washing characteristics of such antibacterial and/or mildewproofing clothing a synthetic resin and an antibacterial and/or mildewproofing agent are applied together to the fibrous material. This, however, deteriorates the feeling of the so treated material.

It has been hitherto proposed that: in spinning synthetic filaments, fine particles of copper compound, copper or zinc per se is added [Jap. Pat. No. Sho 55 - 115440(A) and others]; and an azole derivative is added [Jap. Pat. No. Sho 53 - 139895(A)] and the like. However, it is difficult that such additives are evenly dispersed in the spinning solution. They are likely to aggregate in the fibrous material, thereby making it difficult to spin the fibrous material. Also disadvantageously, the total surface area of the antibacterial additive on which bacteria is allowed to meet with such additive, will decrease as a result of agglomeration, accordingly lowering the antibacterial effect. As a matter of notice the amount of antibacterial additive to be added to the fibrous material is limited from the angle of undesired influence on the polymer. Azole derivatives are so poisonous that practical use is not permitted.

## Disclosure of the Invention:

According to the invention, the first object can be attained to solve concerned problems, by an antibacterial composition, wherein surface of inorganic fine particles is coated with an antibacterial metal and/or metal compound.

Namely, according to the invention, specific gravity of the composition as a whole is made lower by using the inorganic fine particles of less specific gravity, as a carrier, thereby making it easy or convenient to handle the composition in producing bacteria-resistant products. The total surface of antibacterial metal is increased by coating such carrier particles with antibacterial metal, accordingly making it easy for antibacterial metal to be ionized, to improve the antibacterial effect.

As the the carrier of inorganic material, zeolite (aluminosilicate), diatomaceous earth, mica, alumina, kaolin (porcelain clay), talc, silicagel or a mixture thereof may be used, but when a mixture is selected, a care should be paid on composition thereof by taking ionic property of each component into consideration to prevent secondary agglomeration. Another examples of carrier materials are titanium oxide, aluminum oxide, barium sulfate, calcium carbonate, lithopone and white lead.

Preferably mean particle size of the inorganic fine particles is $5\mu$ m or more less, since, in case of that the final product is thin one of fiber, film, paint or the like, use of inorganic fine particles more than $5\mu$ m makes large in maximum size of the composition to give a coarse visual appearance on the final product which reduces a commercial value, although there is no such size limitation for the composition to be applied for the production of thick or massive final products which shall be shaped with use of a mold. Particularly, in producing antibacterial synthetic fiber by adding the antibacterial composition according to the present invention, it is preferable to use the inorganic fine particles of $0.5\mu$ m or more less, since if there are particles of $10\mu$ m in maximum diameter, those may cause clogging in a spinning nozzle. It should be noted that the total surface of antibacterial metal coating on the inorganic fine particles as the carrier, as the mean particle size of the carrier decreases, accordingly improving the bacteria resistance of the final product.

As the antibacterial metals for the antibacterial composition of the invention, silver, copper, zinc, tin, lead, bismuth, cadmium, chromium, mercury and others may be listed, but it is preferable to select the silver, copper or both thereof, from view points of resistance power to bacteria and safety or sanitation. These metals may be used in the form of oxide or chloride, but they may be preferably insoluble in water. The coating amount of such metals ranges from 0.1 to 20% or more based on weight of the inorganic fine particles to be coated. The lower limit may be determined in consideration of the antibacterial effect and application of the antibacterial composition. Namely, when the coating amount of the antibacterial metalis less than 0.1% by weight of the inorganic fine particles to be coated and an bacteria-resistant fiber is to be prepared, it is necessary to add a relatively large amount of the antibacterial additive to a raw spinning solution to to develop a desired antibacterial power, but if the antibacterial composition shall be added to the raw spinning solution in an amount of 20% or more, a break-down of once formed filament is apt to be occurred to reduce a productivity. When both of the silver and copper are employed as the antibacterial metals, a total amount thereof should be made 0.5% by weight or more, the ground of the lower limitation being same with the above.

Conventional vacuum evaporation or reductional deposition method can be applied for coating silver, copper or both on the water-insoluble inorganic fine particles to prepare the antibacterial composition according to the invention.

In case of that the vacuum evaporation method is utilized, the antibacterial composition can be prepared by setting the inorganic fine particles in a chamber of a vacuum evaporator; putting pieces of silver, copper or silver-and-copper alloy in a tungsten basket to set the basket in the chamber; reducing inner pressure of the chamber (until about $2 \times 10^{-4}$ Torr): and heating the basket to cause evaporation of the antibacterial metal or alloy, while vibrating the basket.

While, in case of that the reductional deposition method is utilized, the antibacterial composition can be prepared by dispersing the inorganic fine particles in pure water; mixing the resulting dispersion with a raw platting solution; and adding to the mixture a reducing solution for plating, while stirring the mixture.

According to the vacuum evaporation method, the metal is evaporated in a given fixed direction, and therefore, it is necessary to give vibration to the inorganic fine particles for causing rolling motion, so that the each of the inorganic fine particles can be coated evenly with the evaporated antibacterial metal. In vibration, it is liable that relatively coarse particles come up whereas relatively fine particles come down, and therefore, there is a tendency of grading coated particles in terms of size. Use of carrier particles of irregular size will cause the coating of different amount of antibacterial metal on carrier particles. In contrast thereto, in the reductional deposition method, the antibacterial metal is allowed to deposit on dispersed carrier particles, and therefore even coating is assured. Also, advantageously the coating amount can be controlled exactly with ease. Therefore, it is preferable to utilize the reductional deposition method than the vacuum evaporation method.

According to the invention, the second object of the invention can be attained to solve concerned problems, by electrically conductive composition surface of inorganic fine particles is coated evenly with an electrically conductive metal in an amount of 25% by weight or more based on the weight of the inorganic fine particle.

As the electrically conductive metals, gold, silver, copper, aluminum, tin, nickel, iron, stainless steel and the like may be listed. From the point of electrical conductivity, silver, copper, gold, aluminum, tin, nickel, iron and stainless steel are preferable in this order. However, gold and silver are expensive, and therefore these metals may be advantageously used as an upper or overlying layer, which is laid as the second layer on a first underlying layer of another metal available with reasonable cost, such as copper or aluminum directly covering the inorganic fine particle surface.

When the electrically conductive composition of the invention shall be applied in a oxidizing atmosphere, it is preferable to use gold or silver as the second or upper layer. Of course, the inorganic fine particles may be coated with metals in the form of three or more multi-layer.

Aforesaid vacuum evaporation or reductional deposition method can also be utilized by coating the electrically conductive metal on the fine carrier particles to prepare the electrically conductive composition according to the invention.

4

It is necessary to coat particles of inorganic matter with electrically conductive metal so as to be equal to 25% by weight or more based on the inorganic fine particle because the amount of coating metal less than 25% by weight will provide insufficient conductivity. The amount of coating metal may be increased to 50% by weight or more to increase the conductivity.

Use of the inorganic fine carrier particles having a mean size of $2\mu$ m or more less will cause no trouble in mixing with a given matrix material. From the view point of kneading the electrically conductive composition with the matrix material, the base carrier particles are preferably spherical, but when an orientation thereof in shaping of a final product into consideration, needle-like shape is more preferable, as the form of the carrier particle, in view of stable development of the electrical conductivity.

Any substances which cannot be modified in nature when subjected to electroless plating, can be used as the carrier. Metallic oxides which are insoluble in water, such as titanium oxide, alumina, barium sulfate or calcium carbonate may be used.

An electrically conductive composition according to the present invention may be added to various synthetic polymers (polyester, nylon, acrylic resin, polyethylene, polypropylene, epoxy resin or unsaturated polyester), a raw material for preparing fibers, films, a massive plastic articles, paint or the like for the purpose of giving to the final product antistatic or magnetic shielding property or for preparing a low-temperature heating element.

The resistivity of products can be reduced to $10^4$ ohm $\cdot$ cm or more less by adding the electrically conductive composition in an amount of 50% or more, preferably 70% or more based on the by weight of the product. In many cases, such a blended compositionmay have poor moldability and physical properties, and therefore it is preferable to add the blended composition as a part of raw materials for preparing a composite fiber or composite film. Particularly, when the electrically conductive composition is added as an electrically conductive ingredient for preparing a electrically conductive fiber, the formed filament does not give so higher damage to the the spinning machine, compared with the conventional spinning solution containing metallic oxide-coated particles [for example, Jap. Pat. No. Hei 1 - 32260(B)]. Advantageously, the electrically conductive particles according to the present invention can be partly exposed on fiber surface, and therefore the required amount of electrically conductive particles may be reduced to 1/2 - 1/5, compared with the conventional electrically conductive particles, when applied for the production of carpets, work dresses, uniforms, formal wears and other clothings to give electrically conductivity to these fibrous articles.

A antibacterial shaped product according to the invention, which comprises antibacterial particles and and at least one synthetic resin material selected from the group consisting of polyamide, polyester, polyolefin, polyurethane and acrylic resin is characterized in that said product contains in the amount of 0.1 - 20% by weight inorganic fine particles coated with an antibacterial metal.

According to a first method of the invention, a liquid mixture of dispersion medium and the inorganic fine particles with mean particle size of 0.1 to $5\mu$ m and coated with the antibacterial metal is mixed with polyamide, polyester or polyolefin in molten state, and then the mixture is molded.

According to a second method of the invention, the inorganic fine particles with mean particle size of 0.1 to 5 $\mu$ m and coated with antibacterial metal are dispersed evenly in an organic solvent, the dispersion is added to an organic solvent solution of acrylic copolymer, and finally the mixture as a spinning solution is subjected to wet spinning.

As the polyamide, nylon 6, nylon 66, nylon 12 or the like may be listed; as the polyester polyethylene terephtalate, polybutylene terephtalate or the like may be listed; as the polyurethane, polyether type, polyester type, polycarbonate type one or the like may be listed; and as the polyolefin, polyethylene, polypropylene or the like, or a copolymer thereof may be listed.

When polyurethane is selected as the polymer, a final fiber, film, foam or the like product can be prepared by using dimethylformamide or the like conventional solvent and a conventional wet spinning or wet film formation method. Acrylonitrile copolymer which includes acrylonitrile of at least 40% by weight as a constituent monomer and which has a fiber forming ability may be preferably used. As the copolymer in this type, such one may be shown that acrylonitrile of 40% by weight or more is copolymerized with 60% by weight or more less of another vinylic monomer such as acrylic acid, methacrylic acid or an alkyl ester thereof, or a suitable combination thereof with vinyl acetate, vinyl chloride, vinylidene chloride, sodium allylsulfonate, sodium methalylsulfonate, sodium-2-acrylamide-2-methylpropanesufonate or the like. Particularly, a copolymer of acrylonitrile of 80% by weight or more as well as vinylic monomer and monomer containing sulfonic acid radical of 20% by weight or more less in total, or another copolymer of acrylonitrile of 40% by weight or more as well as vinylidene chloride and monomer containing sulfonic acid radical of 60 - 20% by weight in total is preferable.

The metals as antibacterial one are silver, copper, zinc and the like may be listed and the inorganic fine particles are coated with such a metal in an amount of 1 - 20% by weight and more preferably 3 - 10% by weight based on the inorganic fine particle. If the antibacterial composition has metal coating of less than 1% by weight, it is necessary to add the composition in a relatively large amount to the copolymer because otherwise, no sufficient bacteria-resistivity would result. Disadvantageously the addition of such an excessive amount of antibacterial composition would reduce the molding capability and workability of the final product. Speaking of the upper limit, when the metal coating amount becomes 20% by weight or more based on the weight of the inorganic fine particles, it is in possible to prepare the same at reasonable cost, and further a coloring problem will occur, when the final product is fiber.

As material for the inorganic fine particles, followings may be listed: barium sulfate, calcium carbonate, lithopone (ZnS + BaSO$_4$), white lead (2PbC$_3$ $\cdot$ Pb(OH)$_2$), zinc oxide, titanium oxide, titanium yellow (TiO$_2$ $\cdot$ NiO $\cdot$ Sb$_2$O$_3$) and the like. For general use, white material is preferable among them.

An amount of addition of the antibacterial composition to a polymer varies with the kind of the bacteria-resistant metal and the coated amount thereof, but it ranges from 0.1 to 20%, and more preferably 0.3 to 5.0% by weight based on the polymer. If the amount is less than 0.1%, no sufficient bacteria-resistivity would be caused, whereas if it is more than 20% by weight, molding capability and workability become low as well as physical property of the final product reduces. As the particle size, one from 0.1 to 5$\mu$ m, and more particularly from 0.3 to 2$\mu$ m is preferable, since the use of particles of with size of larger than 5$\mu$ m would lower the workability of the resulting material, and would lower the physical properties of a molded product.

As the dispersion medium to be used in the aforesaid first method, polyester, polyol, polyester ether, polyester-polyether block copolymer and the like may be listed. For prevention of adhesion of raw material to the spinning nozzle or metal mold, and for improvement of the molding capability of the material as well as physical properties of the molded product, it is preferable to use polyesters or polyester ethers of which terminal carboxyl groups are alkylated or replaced by OH and which have an acid value of not more than 4 and a hydroxy radical value of 30 to 50. If it is desired that antibacterial metal-coated particles of inorganic material are dispersed at high concentration and that the resulting thick dispersion remains fluid, preferably use is made of a dispersion medium which remains in liquid state at normal temperature, and has a low viscosity, for instance 200 poise or more less.

The liquid mixture thus obtained includes the antibacterial metal-coated inorganic fine particles of inorganic material of 5 to 50% by weight and the dispersion medium of 95 to 50% by weight. In addition thereto, the mixture may includes a dye, pigment, heat resistant, aging resistant, hydrophilic material and the like. The liquid mixture may be supplied at a fixed rate by using a gear pump or plunger pump so that it may be pumped, added to the molten thermoplastic polymer and mixed therewith. The liquid mixture must remain fluid from normal to molding temperature to permit pumping of the mixture at a fixed rate. If the viscosity of a liquid mixture is 30,000 poise or more, necessary measurement cannot be made with accuracy. Necessary mixing is preferably performed just before the spinning nozzle or metal mold in a melting-and-spinning apparatus, melting-and-injection molding apparatus or melting-and-extrusion molding apparatus. Preferably, a stationary kneading unit having no driving parts may be used, which usually has 5 to 60 kneading elements for well kneading the mixture.

The antibacterial shaped product according to the invention can be prepared by adding 10 - 80% by weight of the antibacterial metal-coated inorganic fine particles to the thermoplastic polymer, kneading the mixture, and melt molding the mixture.

As the solvent to be used in aforesaid second method, dimethylformamide, dimethylacetamide, dimethylsulfoxide, acetone and the like organic solvents generally used in spinning acrylic synthetic fibers may be listed.

As the dispersing apparatus, any conventional wet type grinder may be used, but it is preferable to use a sand grinder, pearl mill, grain mill, dinomill or the like flowing tube type mill for adding continuously the dispersion to the raw spinning solution.

The concentration which the antibacterial metal-coated inorganic fine particles is dispersed in the organic solvent is 5 to 40% by weight, and more particularly 15 to 30% by weight. If the mixing rate of antibacterial particles is less than 5% by weight, the concentration of the raw spinning solution would decrease although depending upon the amount of addition of antibacterial particles, and accordingly the spinning ability would lower, and physical properties of the resulting fiber would be degraded. The concentration is more than 40% by weight would make difficult a desired even dispersion and hence difficult easier industrial operation for producing a desired final product. Spinning can be effected in the conditions similar to those for the production of acrylic synthetic fibers, namely filaments formed by the spinning nozzle are passed through several bathes, and subjected sequentially to stretching, washing, drying and post-treatment.

Best Modes for Carrying Out the Invention:

(I) The invention will be described in more detail with reference to Manufacturing Examples and Use Examples (Productions and Evaluations on antibacterial fibers) of antibacterial compositions according to the invention.

Percent and parts appearing in the following are given on the basis of weight unless no exceptional note is given.

Production Example 1

(1) Following three different liquids were prepared:
A) Titanium oxide dispersion
Pulverized titanium oxide of 65g (mean particle size: $0.5\mu$ m) was dispersed in pure water of 300ml.
B) Silver plating solution
Silver nitrate of 20g was solved in pure water to provide a solution of 800ml. Ammonium hydroxide was added thereto until pH of the solution became 11.
C) Silver plating reducing solution
Potassium sodium tartarate (4 hydrate) of 100g was solved in pure water to provide a solution of 700ml. The solution was kept at 30 °C.
(2) Operation:
Silver plating solution (B) was added to titanium oxide dispersion (A), and while silver plating reduction solution (C) was being added, the mixture was stirred until silver was reduced completely, and thereafter stir was continued for 1 hour.

After stopped the stir, the mixture was subjected to suction filtering by using No. 5C filter paper. Then, the remaining material was washed with pure water, and dried within an air drier at 80°C. for 12 hours to obtain a desired antibacterial composition.

EMPA observation revealed that titanium oxide particles were coated with silver evenly.

Chemical analysis revealed that the silver coating amount was 16.3% by weight.

Production Examples 2 - 4

Three different antibacterial compositions were prepared in the similar way as Production Example 1 except for the followings: pulverized titanium oxide was used in 130, 325 and 680g; and stir was continued for 2 hours after complete reduction of silver.

EMPA observation revealed that every titanium oxide particle was coated with silver evenly.

Chemical analysis revealed that the silver coating amount each of the three antibacterial compositions was 8.9, 3.8 or 1.9%.

Production Example 5

(1) Following copper plating solution and reducing solution were prepared for use in copper plating:
B') Copper plating solution
Copper sulfate (5 hydrate) of 34.6g, potassium sodium tartarate (4 hydrate) of 173g and sodium hydroxide of 50g were solved in pure water to provide a solution of 500ml.
C') Copper plating reduction solution
It was 150ml of 37% formaldehyde solution kept 30°C
(2) Operation:
Copper plating solution (B') was added to titanium oxide dispersion (A) in Production Example 1, and while copper plating reducing solution (C') was added. The mixture was stirred until copper was reduced completely, and thereafter stir was continued for 1 hour.

After stopped the stir, the mixture was suction-filtered by using No. 5C filter paper. Then, the remaining material was washed with pure water, and dried within an air drier at 80°C for 12 hours to obtain a desired antibacterial composition.

EPMA observation revealed that titanium oxide particles were coated with copper evenly.

Chemical analysis revealed that the copper coating amount was 11.9%.

7

Production Examples 6 - 8

Three different antibacterial compositions were prepared in the similar same way as Production Example 5 except for the followings: pulverized titanium oxide was used in 130, 325 and 680g; and stir was continued for 2 hours after complete reduction of copper.

EPMA observation revealed that every titanium oxide particle was coated with copper evenly. Chemical analysis revealed that the copper coating amount of each of the three antibacterial compositions was 6.3, 2.6 or 1.3%.

Application Example 1

20 parts of antibacterial composition which was composed of titanium oxide particles (mean particle size: $0.5\mu$ m) coated with silver (1%); 2 parts of acrylic polymer A whose molecular weight was 50,000, and which was composed of acrylonitrile (hereinafter abbreviated as "AN")/methyl acrylate (hereinafter abbreviated as "MA")/sodium metalylsulphonate (90.0/9.0/1.0); and 78 parts of dimethylformamide (hereinafter abbreviated as "DMF") were dispersed by using a homomixer for 1 hour. Thereafter, the preliminary dispersion was subjected to additional dispersion treatment by using a sand grinder for about 5 minutes. The resulting homogenized dispersion was added to a raw spinning solution which was composed of 20 parts of acrylic polymer A and 80 parts of DMF, by using a pipeline mixer to provide three spinning solutions respectively containing the homogenized dispersion of 1.0, 3.0 and 5.0%. Each of the spinning solutions was subjected to wet spinning to provide an antibacterial acrylic fiber of 3 denier.

Table 1 shows the evaluations of the antibacterial properties of these fibers. As seen from the Table, addition of the antibacterial composition of 3.0% or more will provide good antibacterial effect. The evaluation was given by spinning the antibacterial filaments in a conventional manner to make the same into No. 30 single yarn, knitting with use of the yarn to prepare a sample cloth, and testing the sample cloth according to "shake flask" method prescribed in the Permission Standard of Antibacterial and Deodorant Goods by the Association of Sanitary Treatment of Fibrous Goods (same with subsequent Application Examples and others).

The bacterial reduction rates of the samples are given in the columns on the right side of "Washing Times" in Tables 1, 2 and 3.

Application Example 2

Antibacterial composition comprising titanium oxide particles(mean particle size: $0.5\mu$ m) coated with silver (18%), was used to obtain an antibacterial acrylic fiber of the same composition as Application Example 1 according to the similar operation as in as Application 1. The evaluation of antibacterial properties of the acrylic fiber is given in Table 1.

As apparent from the Table, addition of the antibacterial composition of 0.2% or more will provide good antibacterial effect.

Application Example 3

An antibacterial composition comprising titanium oxide particles (mean particle size: $0.5\mu$ m) coated with copper (2%) was used to obtain an antibacterial acrylic fiber of the same composition as in Application Example 1 according to the similar operation as in Application Example 1. The evaluation of antibacterial properties of the antibacterial acrylic fiber is given in Table 2.

As apparent from the Table, addition of the antibacterial composition of 3.0% or more will provide good antibacterial effect.

Application Example 4

An antibacterial composition comprising titanium oxide particles (mean particle size: $0.5\mu$ m) coated with copper (15%) was used to obtain an antibacterial acrylic fiber of the same composition as in Application Example 1 according to the similar operation as in Application Example 1. The evaluation of antibacterial properties of the acrylic fiber is given in Table 2.

As apparent from the Table, addition of the antibacterial composition of 0.2% or more will provide good antibacterial effect.

Application Example 5

An antibacterial composition comprising titanium oxide particles (mean particle size: $0.5\mu$ m) coated with silver (1%) and with copper (1%) respectively was used to obtain an antibacterial acrylic fibers of the same composition as in Application Example 1 according to the similar operation as in Application Example 1. The evaluation of antibacterial properties of the acrylic fiber is given in Table 3.

As apparent from the Table, addition of the antibacterial composition 3.0% or more will provide good antibacterial effect.

Application Example 6

An antibacterial composition comprising titanium oxide particles (mean particle size: $0.5\mu$ m) coated with silver (18%) and with copper (8%) respectively was used to obtain an antibacterial acrylic fibers of the same composition as in Application Example 1 according to the similar operation as in Application Example 1. The evaluation of antibacterial properties of the acrylic fiber is given in Table 3.

As apparent from the Table, addition of the antibacterial composition of 0.2% or more will provide good antibacterial effect.

Application Example 7

20 parts of an antibacterial composition comprising titanium oxide particles (mean particle size: $0.5\mu$ m) coated with silver (5%); 2 parts of acrylic polymer A whose molecular weight was 50,000, and which was composed of AN/MA/sodium metaclylsulphonate (90.0/9.0/1.0); and 78 parts of DMF were dispersed by using a homomixer for 1 hour. Thereafter, the resulting preliminary dispersion was subjected to additional dispersion operation by using a sand grinder for about 5 minutes. The homogenized dispersion was added continuously to a raw spinning solution which was composed of 23 parts of acrylic polymer A and 77 parts of DMF, by using a pipeline mixer to provide a spinning solution containing the homogenized dispersion of 0.3%. The spining solution was subjected to wet spinning to prepare antibacterial acrylic fiber of 3 denier.

Table 4 shows the evaluation of antibacterial properties of the fiber. As seen from the Table, the antibacterial fiber has good resistivity to various bacteria.

# EP 0 427 858 A1

Table 1

| bacteria | antibacterial metals | Ag 1% | Ag 1% | Ag 1% | Ag 18% | Ag 18% | Ag 18% |
|---|---|---|---|---|---|---|---|
| | addition amount | 5.0 | 3.0 | 1.0 | 0.3 | 0.2 | 0.05 |
| Klebsiella pneumoniae | washing times 0 | 99.1% | 98.2% | 19.1% | 99.5% | 97.3% | 22.3% |
| | 30 | 98.3% | 89.1% | 18.3% | 99.2% | 95.7% | 19.5% |
| remarks | | application example (1) | application example (1) | comparison sample | application example (2) | application example (2) | comparison sample |

Table 2

| bacteria | antibacterial metals | Cu 2% | Cu 2% | Cu 2% | Cu 15% | Cu 15% | Cu 15% |
|---|---|---|---|---|---|---|---|
| | addition amount | 5.0 | 3.0 | 1.0 | 0.3 | 0.2 | 0.05 |
| Klebsiella pneumoniae | washing times 0 | 99.5% | 98.8% | 21.5% | 99.8% | 98.1% | 25.5% |
| | 30 | 99.0% | 92.5% | 20.1% | 99.5% | 95.7% | 23.2% |
| remarks | | application example (3) | application example (3) | comparison sample | application example (4) | application example (4) | comparison sample |

Table 3

| bacteria | | | | | | |
|---|---|---|---|---|---|---|
| antibacterial metals | Ag 1% + Cu 1% | Ag 1% + Cu 1% | Ag 1% + Cu 1% | Ag 18% + Cu 8% | Ag 18% + Cu 8% | Ag 18% + Cu 8% |
| addition amount | 5.0 | 3.0 | 1.0 | 0.3 | 0.2 | 0.05 |
| Klebsiella pneumoniae — washing times 0 | 99.3% | 98.5% | 20.5% | 99.7% | 97.7% | 24.1% |
| Klebsiella pneumoniae — washing times 30 | 98.8% | 91.3% | 18.9% | 99.1% | 95.2% | 21.7% |
| remarks | application example (5) | application example (5) | comparison sample | application example (6) | application example (6) | comparison example |

Table 4

| bacteria | Klebsiella pneumoniae | Staphylococcus aureus | Proteus vulgaris | Pseudomonus aereginosa |
|---|---|---|---|---|
| bacteria reduction rate (%) | 99.4 | 90.8 | 98.3 | 96.8 |

Production Example 9

11

An antibacterial composition was prepared in the similar way as in Production Example 1 except for: necessary treatment was effected prior to washing by using 1N hydrochloric acid of 300ml; and the material was put in an yellow container after suction-filtering, and was dried at 80°C .

Production Examples 10 - 12

Antibacterial compositions whose silver coating amounts were 5.0%, 3.0% and 1.0% respectively, were prepared in the similar way as in Production Example 9 except for use of pulverized titanium oxide of 241.3g, 410.6g and 1257.3g.

Production Examples 13

An antibacterial composition was prepared in the similar way as in Production Example 1. Drying was effected at 80°C for 12 hours, and then thermal treatment was effected at 400°C , thereby providing titanium oxide particles each evenly coated with copper oxide. The copper coating amount was 11.9%.

Production Examples 14 - 16

An antibacterial compositions whose copper coating amounts were 6.3%, 2.6% and 1.3% respectively, were prepared in the similar way as in Production Examples 6 - 8 by using pulverized titanium oxide of 241.3g, 410.6g and 1257.3g respectively.

Application Example 8

An antibacterial acrylic fiber was prepared in the similar way as in Application Example 1 except for: use was made of antibacterial composition whose particles were coated with silver chloride of 10%; and it was added and mixed with "A" so as to make it to 1.0, 0.5 and 0.1% based on "A". A bacterial resistivity was tested and results thereof were given in Table 5.

It was found that addition of the antibacterial composition of 3.0% or more provides good antibacterial properties.

Application Example 9

An antibacterial acrylic fiber was prepared in the similar way as in Application Example 8 except for: use was made of antibacterialcomposition whose particles were coated with silver oxide of 5% in terms of silver. A bacterial resistivity was tested and results thereof were given in Table 5.

It was found that addition of the antibacterial composition of 0.7% or more provides good antibacterial properties.

Application Example 10

An antibacterial acrylic fiber was prepared in the similar way as in Application Example 8 except for: use was made of antibacterial composition whose particles were coated with copper oxide of 5 percent in terms of copper. A bacterial resistivity was tested and results thereof were given in Table 6.

It was found that addition of the antibacterial composition of 0.7% or more provides good antibacterial properties.

Application Example 11

Antibacterial acrylic fibers were prepared in the similar way as in Application Example 8 except for: use was made of antibacterial compositions whose particles were coated with silver chloride of 5% in terms of silver, and coated with copper oxide of 1% in terms of copper, respectively. A bacterial resistivity was tested and results thereof were given in Table 6.

It was found that addition of the antibacterial composition of 0.6% or more provides good antibacterial properties.

Application Example 12

An antibacterial acrylic fiber was prepared in the similar way as in Application Example 8 except for: use was made of antibacterial compositions whose particles were coated with silver oxide of 3% in terms of silver, and coated with copper oxide of 5% in terms of copper, respectively. A bacterial resistivity was tested and the results thereof were given in Table 7.

Addition of antibacterial composition of 0.5% or more was found preferable.

Application Example 13

Antibacterial acrylic fibers were prepared in the similar way as in Application Example 8 except for: use was made of antibacterialcompositions whose particles were coated with silver chloride of 3% in terms of silver, and coated with copper oxide of 3% in terms of copper, respectively. A bacterial resistivity was tested, and results thereof were given in Table 7.

Addition of antibacterial composition of 0.6% or more was found preferable.

Application Example 14

An antibacterial acrylic fiber was prepared in the similar way as in Application Example 8 except for: use was made of antibacterial composition whose particles were coated with silver chloride of 5% in terms of silver. A bacterial resistivity was tested and results thereof were given in Table 8.

Table 5

| bacIteria | antibacterial metals | AgCl (Ag 10%) | AgCl (Ag 10%) | AgCl (Ag 10%) | $Ag_2O$ (Ag 5%) | $Ag_2O$ (Ag 5%) | $Ag_2O$ (Ag 5%) |
|---|---|---|---|---|---|---|---|
| | addition amount | 1.0 | 0.5 | 0.1 | 1.0 | 0.7 | 0.2 |
| | washing times | | | | | | |
| Klebsiella | 0 | 99.8% | 98.7% | 20.4% | 98.5% | 97.6% | 19.3% |
| pneumoniae | 30 | 99.5% | 98.2% | 18.3% | 98.1% | 96.2% | 18.1% |
| remarks | | application example (8) | application example (8) | comparison sample | application example (8) | application example (8) | comparison sample |

Table 6

| bacteria | antibacterial metals | $Cu_2O$ (Cu5%) | $Cu_2O$ (Cu5%) | $Cu_2O$ (Cu5%) | AgCl (Ag5%) + $Cu_2O$ (Cu1%) | AgCl (Ag5%) + $Cu_2O$ (Cu1%) | AgCl (Ag5%) + $Cu_2O$ (Cu1%) |
|---|---|---|---|---|---|---|---|
| | addition amount | 1.0 | 0.7 | 0.2 | 1.0 | 0.6 | 0.2 |
| | washing times | | | | | | |
| Klebsiella pneumoniae | 0 | 99.1% | 98.0% | 21.8% | 98.9% | 97.7% | 20.5% |
| | 30 | 98.7% | 96.9% | 20.3% | 98.4% | 96.8% | 18.6% |
| remarks | | application example (10) | application example (10) | comparison sample | application example (11) | application example (11) | comparison sample |

EP 0 427 858 A1

Table 7

| antibacterial metals | $Ag_2O$(Ag3%) + $Cu_2O$(Cu5%) | $Ag_2O$(Ag3%) + $Cu_2O$(Cu5%) | $Ag_2O$(Ag3%) + $Cu_2O$(Cu5%) | AgCl(Ag3%) + $Ag_2O$(Ag3%) | AgCl(Ag3%) + $Ag_2O$(Ag3%) | AgCl(Ag3%) + $Ag_2O$(Ag3%) |
|---|---|---|---|---|---|---|
| addition amount | 1.0 | 0.5 | 0.2 | 1.0 | 0.6 | 0.2 |
| bacteria / washing times — Klebsiella pneumoniae — 0 | 99.2% | 97.9% | 22.3% | 98.7% | 97.4% | 19.9% |
| 30 | 98.6% | 94.4% | 20.7% | 98.2% | 96.3% | 18.3% |
| remarks | application example (12) | application example (12) | comparison sample | application example (13) | application example (13) | comparison sample |

Table 8

| bacteria | Klebsiella pneumoniae | Staphylococcus aureus | Proteus vulgaris | Pseudomonus aereginosa |
|---|---|---|---|---|
| bacteria reduction rate (%) | 99.6 | 90.9 | 98.4 | 97.1 |

Production Example 17

15

An antibacterial composition whose silver coating amount was 16.3% was prepared in the similar way as in Production Example 1 by using pulverized zeolite as carrier particles.

Production Examples 18 - 20

Antibacterial compositions whose silver coating amount was 5.0%, was prepared in the similar way as in Production Example 17 except for: alumina, kaolin, talc, silica gel and diatomaceous earth, each weighing 241.3g were used as carriers; and necessary stir was continued for 2 hours.

Production Example 21

An antibacterial composition whose copper coating amount was 11.9% was prepared in the similar way as in Production Example 5 except for use of alumina dispersion.

Production Examples 22 - 24

Antibacterial compositions whose copper coating amount was 5.0% was prepared in the similar way as in Production Example 21 except for: zeolite, kaolin, talc, silica gel and diatomaceous earth, each weighing 166.1g were used as carriers; and necessary stir was continued for 2 hours.

Application Example 15

An antibacterial acrylic fiber was prepared in the similar way as in Application Example 1 except for: use was made of antibacterial composition whose alumina particles (mean particle size: $0.5\mu$ m) were coated with silver of 5%; and it was added and mixed with "A" so as to make it to 1.0, 0.5 and 0.1% of "A". A bacterial resistivity was tested, and results thereof were given in Table 9.

It is found that addition of the antibacterial composition of 0.7% or more provides good antibacterial properties.

Application Example 16

An antibacterial acrylic fiber was prepared in the similar way as in Application Example 15 except for: use was made of antibacterial composition whose kaolin carrier particles were 0.5 $\mu$ m in mean diameter. A bacterial resistivity was tested, and results thereof were given in Table 9. It is found that addition of the antibacterial composition of 0.8% or more provides good antibacterial properties.

Application Example 17

An antibacterial acrylic fiber was prepared in the similar way as in Application Example 15 except for: use was made of antibacterial composition whose alumina carrier particles were 0.5 $\mu$ m in mean diameter, and were coated with copper equal to 11.9%. A bacterial resistivity was tested, and results thereof were given in Table 10. It is found that addition of the antibacterial composition of 0.5% or more provides good antibacterial properties.

Application Example 18

An antibacterial acrylic fiber was prepared in the similar way as in Application Example 15 except for: use was made of antibacterial composition whose kaolin carrier particles were 0.5 $\mu$ m in mean diameter, and were coated with copper of 5%. A bacterial resistivity was tested, and results thereof were given in Table 10. It is found that addition of the antibacterial composition of 0.8% or more provides good antibacterial properties.

Application Example 19

An antibacterial acrylic fiber was prepared in the similar way as in Application Example 15 except for: use was made of antibacterial compositions whose zeolite and alumina carrier particles were $0.5\mu$ m in mean diameter, and were coated with silver and copper, each of 5%, respectively. A bacterial resistivity was tested, and results thereof were given in Table 11. It is found that addition of the antibacterial composition of 0.5% or more is preferable.

Application Example 20

An antibacterial acrylic fiber was prepared in the similar way as in Application Example 15 except for: use was made of antibacterial compositions whose kaolin and diatomaceous earth carrier particles were $0.5\mu$ m in mean diameter, and were coated with silver and copper, each of 5%, respectively. A bacterial resistivity was tested, and results thereof were given in Table 11. It is found that addition of the antibacterial composition of 0.6% or more is preferable.

Application Example 21

An antibacterial acrylic fiber was prepared in the similar way as in Application Example 15 except for: use was made of antibacterial compositions whose talc and silica gel carrier particles were $0.5\mu$ m in mean diameter, and were coated with silver and copper, each of 5%, respectively. A bacterial resistivity was tested, and results thereof were given in Table 12. It is found that addition of the antibacterial composition of 0.5% or more is preferable.

Application Example 22

An antibacterial acrylic fiber was prepared in the similar way as Application Example 15 except for: use was made of antibacterial compositions whose silica gel carrier particles were $0.5\mu$ m in mean diameter. A bacterial resistivity was tested, and results thereof were given in Table 13.

Table 9

| bacteria | antibacterial metals | Ag 5% | Ag 5% | Ag 5% | Ag 5% | Ag 5% | Ag 5% |
|---|---|---|---|---|---|---|---|
| | addition amount | 1.0 | 0.7 | 0.2 | 1.0 | 0.8 | 0.4 |
| | washing times | | | | | | |
| _Klebsiella pneumoniae_ | 0 | 99.5% | 98.4% | 18.9% | 98.8% | 97.6% | 20.3% |
| | 30 | 99.2% | 93.7% | 18.1% | 98.6% | 96.0% | 19.5% |
| remarks | | application example (15) | application example (15) | comparison sample | application example (16) | application example (16) | comparison sample |

Table 10

| bacteria | antibacterial metals | Cu 11.9% | Cu 11.9% | Cu 11.9% | Cu 5% | Cu 5% | Cu 5% |
|---|---|---|---|---|---|---|---|
| | addition amount | 1.0 | 0.5 | 0.2 | 1.0 | 0.8 | 0.2 |
| | washing times | | | | | | |
| _Klebsiella pneumoniae_ | 0 | 99.6% | 98.9% | 21.8% | 98.9% | 97.8% | 19.0% |
| | 30 | 99.1% | 95.3% | 20.4% | 98.5% | 96.3% | 18.2% |
| remarks | | application example (17) | application example (17) | comparison sample | application example (18) | application example (18) | omparison sample |

Table 11

| bacteria | antibacterial metals | Ag 5% + Cu 5% | Ag 5% + Cu 5% | Ag 5% + Cu 5% | Ag 5% + Cu 5% | Ag 5% + Cu 5% | Ag 5% + Cu 5% |
|---|---|---|---|---|---|---|---|
| | addition amount / washing times | 1.0 | 0.5 | 0.1 | 1.2 | 0.6 | 0.2 |
| Klebsiella pneumoniae | 0 | 99.4% | 98.5% | 19.7% | 99.1% | 98.4% | 20.8% |
| | 30 | 99.0% | 94.6% | 19.1% | 98.6% | 94.9% | 19.3% |
| remarks | | application example (19) | application example (19) | comparison sample | application example (20) | application example (20) | comparison example |

Table 12

| bacteria | antibacterial metals | Ag 5% + Cu 5% | Ag 5% + Cu 5% | Ag 5% + Cu 5% |
|---|---|---|---|---|
| | addition amount / washing times | 1.0 | 0.5 | 0.2 |
| Klebsiella pneumoniae | 0 | 98.8% | 98.3% | 21.3% |
| | 30 | 97.6% | 97.2% | 20.1% |
| remarks | | application example (21) | application example (21) | comparison sample |

EP 0 427 858 A1

19

## Table 13

| bacteria | *Klebsiella* *pneumoniae* | *Staphylococcus* *aureus* | *Proteus* *vulgaris* | *Pseudomonus* *aereginosa* |
|---|---|---|---|---|
| bacteria reduction rate (%) | 98. 9 | 90. 3 | 97. 8 | 96. 2 |

Production Example 25

An antibacterial composition whose silver coating amount was 16.3% was obtained in the similar way as in Production Example 1 except for use of barium sulfate particles (mean particle diameter: $0.7\mu$ m) as carrier.

Production Examples 26-28

Antibacterial compositions whose silver coating amounts were 8.9%, 3.8% and 1.9%, were obtained in the similar way as in Production Example 25 except for: use was made of barium sulfate particles, each weighing 130g, 325g and 680g; and stir was performed for 2 hours.

Production Example 29

An antibacterial composition whose copper coating amount was 11.9% was obtained in the similar way as in Production Example 5 except for use of barium sulfate dispersion.

Production Examples 30 - 32

Antibacterial compositions whose copper coating amounts were 6.3%, 2.6% and 1.3% were prepared in the similar way as in Production Examples 26 - 28 except for use of copper as antibacterial metal.

Application Example 23

An antibacterial acrylic fiber was prepared in the similar way as in Application Example 1 except for: use was made of antibacterialcomposition of Production Example 25. A bacterial resistivity was tested, and results thereof were given in Table 14. Addition of the antibacterial composition of 3.0% or more was found to be preferable.

Application Example 24

An antibacterial acrylic fiber was prepared in the similar way as in Application Example 2 except for: use was made of antibacterial composition of Production Example 25. A bacterial resistivity was tested, and results thereof were given in Table 14. Addition of the antibacterial composition of 0.2% or more was found to be preferable.

EP 0 427 858 A1

Application Example 25

An antibacterial acrylic fiber was prepared in the similar way as in Application Example 3 except for: use was made of antibacterial composition of Production Example 25. A bacterial resistivity was tested, and results thereof were given in Table 15. Addition of the antibacterial composition of 3.0% or more was found to be preferable.

Application Example 26

An antibacterial acrylic fiber was prepared in the similar way as in Application Example 4 except for: use was made of antibacterial composition of Production Example 25. A bacterial resistivity was tested, and results thereof were given in Table 15. Addition of the antibacterial composition of 0.2% or more was found to be preferable. -

Application Example 27

An antibacterial acrylic fiber was prepared in the similar way as in Application Example 5 except for: use was made of antibacterial composition of Production Example 25. A bacterial resistivity was tested, and results thereof were given in Table 16. Addition of the antibacterial composition of 3.0% or more was found to be preferable.

Application Example 28

An antibacterial acrylic fiber was prepared in the similar way as in Application Example 6 except for: use was made of antibacterial composition of Production Example 25. A bacterial resistivity was tested, and results thereof were given in Table 16. Addition of the antibacterial composition of 0.2% or more was found to be preferable.

Application Example 29

An antibacterial acrylic fiber was prepared in the similar way as in Application Example 7 except for: use was made of antibacterial composition of Production Example 25. A bacterial resistivity was tested, and results thereof were given in Table 17.

(II) An electrically conductive composition according to the invention will be described in detail with reference Manufacturing Examples and Use Examples.

Percent and parts appearing in the following are given in terms of weight unless no exceptional note is given.

21

Table 14

| bacteria | antibacterial metals | Ag 1% | Ag 1% | Ag 1% | Ag 18% | Ag 18% | Ag 18% |
|---|---|---|---|---|---|---|---|
| | addition amount | 5.0 | 3.0 | 1.0 | 0.3 | 0.2 | 0.05 |
| | washing times | | | | | | |
| Klebsiella pneumoniae | 0 | 99.3% | 98.5% | 19.8% | 99.7% | 98.3% | 25.1% |
| | 30 | 98.7% | 91.5% | 18.8% | 99.1% | 96.2% | 20.7% |
| remarks | | application example (23) | application example (23) | comparison sample | application example (24) | application example (24) | comparison sample |

Table 15

| bacteria | antibacterial metals | Cu 2% | Cu 2% | Cu 2% | Cu 15% | Cu 15% | Cu 15% |
|---|---|---|---|---|---|---|---|
| | addition amount | 5.0 | 3.0 | 1.0 | 0.3 | 0.2 | 0.05 |
| | washing times | | | | | | |
| Klebsiella pneumoniae | 0 | 99.1% | 98.5% | 20.7% | 99.5% | 98.4% | 23.1% |
| | 30 | 98.7% | 93.3% | 19.2% | 99.1% | 96.2% | 21.0% |
| remarks | | application example (25) | application example (25) | comparison sample | application example (26) | application example (26) | omparison sample |

EP 0 427 858 A1

Table 16

| antibacterial metals | | Ag 1% + Cu 1% | Ag 1% + Cu 1% | Ag 1% + Cu 1% | Ag 18% + Cu 8% | Ag 18% + Cu 8% | Ag 18% + Cu 8% |
|---|---|---|---|---|---|---|---|
| addition amount | | 5.0 | 3.0 | 1.0 | 0.3 | 0.2 | 0.05 |
| bacteria | washing times | | | | | | |
| Klebsiella pneumoniae | 0 | 99.5% | 98.1% | 21.3% | 99.9% | 98.1% | 25.8% |
| | 30 | 98.3% | 92.7% | 17.2% | 99.2% | 96.2% | 23.1% |
| remarks | | application example (27) | application example (27) | comparison sample | application example (28) | application example (28) | comparison example |

Table 17

| bacteria | Klebsiella pneumoniae | Staphylococcus aureus | Proteus vulgaris | Pseudomonus aeraginosa |
|---|---|---|---|---|
| bacteria reduction rate (%) | 99.6 | 92.5 | 97.8 | 95.2 |

Production Example 33

(1) Following three different solution were prepared:

A) Carrier particle dispersion

Fine carrier particles of 100g were dispersed in pure water of 500ml.

B) Silver plating solution

Silver nitrate of 68.5g was solved in pure water to provide a solution of 1000ml. Ammonium hydroxide was added thereto until the pH of the solution became 11.

C) Silver plating reducing solution

Potassium sodium tartarate (4 hydrate) of 220g was solved in pure water to provide a solution of 500ml. The solution was kept at 30°C.

(2) Operation

Pulverized titanium oxide was used as fine carrier particles (mean diameter: 1.5μ m). Silver plating solution (B) was added to the carrier particle dispersion (A), and while silver plating reducing solution (C) was being added, the mixture was stirred at 30°C until silver was reduced completely, and thereafter, stir was continued for 1 hour.

After stopped the stir, the mixture was subjected to suction-filtering by using No. 5C filter paper. Then, the remaining material was washed with pure water, and dried within an air drier at 80°C for 12 hours to obtain a desired electrically conductive composition.

EPMA observation revealed that titanium oxide particles were coated with silver evenly.

Chemical analysis revealed that the silver coating amount was 30.1%.

Production Example 34

An electrically conductive composition was prepared in the similar way as in Production Example 33 except for: silver nitrate of 159.1g was contained in the silver plating solution, and potassium sodium tartarate (4 hydrate) of 500g was contained in the plating reducing solution.

EPMA observation revealed that every titanium oxide particle was coated with silver evenly.

Chemical analysis revealed that the silver coating amount was 50.1%.

Production Example 35

An electrically conductive composition was prepared in the similar way as in Production Example 33 except for use of pulverized alumina as carrier particles (mean particle size: 0.2 μ m).

EPMA observation revealed that every alumina particle was coated with silver evenly. Chemical analysis revealed that the silver coating amount was 30.2%.

Production Example 36

An electrically conductive composition was prepared in the similar way as in Production Example 34 except for use of pulverized alumina as carrier particles.

EPMA observation revealed that every alumina particle was coated with silver evenly. Chemical analysis revealed that the silver coating amount was 50.0%.

Production Example 37

An electrically conductive composition was prepared in the similar way as in Production Example 34 except for use of barium sulfate particles as carrier particles (mean particle size: 1.5 μ m).

EPMA observation revealed that every barium sulfate particle was coated with silver evenly. Chemical analysis revealed that the silver coating amount was 30.0%.

Production Example 38

An electrically conductive composition was prepared in the similar way as in Production Example 35 except for use of barium sulfate particles as carrier particles.

EPMA observation revealed that every barium sulfate particle was coated with silver evenly. Chemical analysis revealed that the silver coating amount was 50.2%.


Production Example 39

An electrically conductive composition was prepared in the similar way as in Production Example 34 except for use of calcium carbonate particles as carrier particles (mean particle size: $1.5\mu$ m).

EPMA observation revealed that every calcium carbonate particle was coated with silver evenly. Chemical analysis revealed that the silver coating amount was 30.1%.


Production Example 40

An electrically conductive composition was prepared in the similar way as in Production Example 35 except for use of calcium carbonate particles as carrier particles.

EPMA observation revealed that every calcium carbonate particle was coated with silver evenly. Chemical analysis revealed that the silver coating amount was 50.1%.


Production Example 41

(1) Following copper plating solution and reducing solution were prepared for the purpose of using in copper plating:

(B') Copper plating solution

Copper nitrate (5 hydrate) of 173.0g, potassium sodium tartarate (4 hydrate) of 350g and sodium hydroxide of 100g were solved in pure water to provide a solution of 2000ml.

(C') Copper plating reducing solution

It was 37% formaldehyde solution of 750ml kept at 30°C .

(2) Operation:

Pulverized titanium oxide was used as carrier particles. Copper plating solution (B') was added to the dispersion (A) in the same way as in Production Example 34, and while copper plating reduction solution (C') was being added, the mixture was stirred at 30°C until copper was reduced completely, and thereafter stir was still continued for 1 hour.

After stopped the stir, the mixture was suction-filtered by using No. 5C filter paper. Then, the remaining material was washed with pure water, and was dried within an air drier at 80°C for 12 hours. Thus, desired electrically conductive composition resulted. EPMA observation revealed that titanium oxide particles were coated with copper evenly. Chemical analysis revealed that the copper coating amount was 30.3%.


Production Example 42

An electrically conductive composition was prepared in the similar way as in Production Example 41 except for: the copper plating solution containing copper sulfate of 40.1g; and the copper-reduction solution containing potassium sodium tartarate (4 hydrate) of 1100g.

EPMA observation revealed that every titanium oxide particle was coated with copper evenly. Chemical analysis revealed that the copper coating amount was 50.2%.


Production Example 43

An electrically conductive composition was prepared in the similar way as in Production Example 41 except for use of pulverized alumina as fine carrier particles.

EPMA observation revealed that every alumina particle was coated with copper evenly. Chemical analysis revealed that the copper coating amount was 30.1%.


Production Example 44

An electrically conductive composition was prepared in the similar way as in Production Example 42 except for use of pulverized alumina as fine carrier particles.

EPMA observation revealed that every alumina particle was coated with copper evenly. Chemical analysis revealed that the copper coating amount was 50.3%.

Production Example 45

An electrically conductive composition was prepared in the similar way as in Production Example 41 except for use of pulverized barium sulfate as fine carrier particles.

EPMA observation revealed that every barium sulfate particlewas coated with copper evenly. Chemical analysis revealed that the copper coating amount was 30.4%.

Production Example 46

An electrically conductive composition was prepared in the similar way as in Production Example 42 except for use of pulverized barium sulfate as fine carrier particles.

EPMA observation revealed that every barium sulfate particle was coated with copper evenly. Chemical analysis revealed that the copper coating amount was 50.1%.

Production Example 47

An electrically conductive composition was prepared in the similar way as in Production Example 41 except for use of pulverized calcium carbonate as fine carrier particles.

EPMA observation revealed that every calcium carbonate particle was coated with copper evenly. Chemical analysis revealed that the copper coating amount was 30.1%.

Production Example 48

An electrically conductive composition was prepared in the similar way as Production Example 42 except for use of pulverized calcium carbonate as fine carrier particles.

EPMA observation revealed that every calcium carbonate particle was coated with copper evenly. Chemical analysis revealed that the copper coating amount was 50.3%.

Production Example 49

Titanium oxide particles coated with copper of 30.3% (113.9 grams) as in Production Example 41, were subjected to the treatment similar to that as in Production Example 33 by using a silver plating solution containing silver nitrate of 20g and by using potassium sodium tartarate (4 hydrate) of 100g to obtain fine dark silver gray particles.

Chemical analysis of the fine particles revealed that: copper content was 27%; and silver content was 10%.

Production Example 50

Barium sulfate particles coated with copper equal to 30.4% (101.3g) as in Production Example 45, were subjected to the treatment similar to that as in Production Example 33 by using a silver plating solution containing silver nitrate of 40g and by using potassium sodium tartarate (4 hydrate) of 200g to obtain fine silver gray particles.

Chemical analysis of the fine particles revealed that: copper content was 24.3% and silver content was 20.0%.

Production Example 51

Titanium oxide particles coated with copper of 27% and with silver of 10% (126.6 grams) as in Production Example 49, were dispersed in pure water of 500ml. Then, chloroauric acid of 26.7g was solved in pure water, and aqueous ammonia was added to the solution until the pH of the solution became 11. The resulting solution was added to said dispersion, and a 5% hydrazinehydrate solution of 200ml was added to the mixture, while being stirred at about 60°C to obtain fine brownish particles.

Chemical analysis of the fine brown particles revealed that: copper content was 24.3%; silver content 9.0%; and gold content 9.9%.

Production Example 52

Fine titanium oxide particles (mean particle diameter: 1.5 $\mu$ m) of 200g were put in a chamber of an evaporation apparatus. An evaporation source (pieces of aluminum) was put in a tungsten basket, and then the basket was put in the chamber of evaporation apparatus. The chamber was evacuated until its inner pressure was reduced to $2 \times 10^{-4}$ Torr. While the titanium oxide particles were being vibrated, the tungsten basket was heated. The evaporation was terminated when the metallic evaporation source of 50g was exhausted to obtain gray white particles.

Chemical analysis of the fine particles revealed that aluminum content was 22%.

The aluminum-coated titanium oxide particles of 65g was dispersed in pure water of 500ml. Another aluminum-coated titanium oxide particles of 65g was dispersed in pure water of 500ml. The first particles were coated silver in the same way as in Example 49, whereas the second were coated with gold in the similar way as in Example 51 excepting for use of chloroauric acid of 13.3g and 5% hydrazinehydrate solution of 100 ml.

The silver content of the silver-aluminum coated particles was 16.3%, whereas the aluminum content was 18.4%.

The gold content of the gold-aluminum coated particles was 10.6%, whereas the aluminum content was 19.7%.

A resistivity of the particles prepared in Production Examples 33 - 52 ranged from 0.8 to 1.2 ohm·cm.

Application Example 30

Electrically conductive compositions of Production Examples 33 - 52 whose resistivity ranged from 0.8 to 1.2 ohm·cm (50 or 70%), were mixed and kneaded with nylon 6 polymer whose molecular weight was about 17,000 and melting point was 215°C. The resulting electrically conductive polymer was used as core, whereas same nylon 6 polymer was used as sheath. Specifically these materials (composition ratio of 1 : 10) were extruded from an orifice with diameter of 0.3 mm at 280°C, and the extruded nylon filament was wound at the rate of 1,000 m/min.

The resulting nylon filament was stretched three times in length by using a hot pin to obtain nylon filament of 20 denier. Its resistivity was 10 ohm·cm or more less, and the filament showed good electrical conductivity.

Reference Example 1

A filament was produced in the similar way as in Application Example 30 except for: fine titanium oxide particles coated with silver of 10% (resistivity : $5 \times 10^5$ ohm·cm), which particles were prepared in the manner similar to that in Production Example 33, were added to and kneaded with nylon 6. The amount of coated titanium particles occupied as 70% of the kneaded mixture, which was used as core.

The resistivity of the filament was $10^6$ ohm·cm and thus it can not be said that the filament has good electric conductivity.

Application Example 31

An electrically conductive composition was prepared by using titanium oxide particles whose mean particle size was 1.0 $\mu$ m. It was prepared in the similar way as in Production Example 49. The resulting electrically conductive composition (75 %) was mixed and kneaded with a low density polyethylene whose molecular weight was about 50000 and melting point was 102°C . The resulting electrically conductive polymer composition and a nylon 6 polymer whose molecular weight was about 17000, and melting point was 215°C was composed with volume ratio of 1 to 10 and in the form of so-called side-by-side. The composite was subjected to spinning-and-stretching operation as in Application Example 30 to obtain an electrically conductive composite filament. After winding the filament to a wind-up roll weighing 1kg, it was found that: the traveler which was used in stretching process, worn little, and undesired filament breaking or discontinuance rate was 5 to 15% (This corresponds to the the case of a filament containing electrically conductive carbon black. In case of another filament contained titanium oxide particles coated with metallic oxide, the traveler worn remarkably, and undesired filament breaking or discontinuance rate was 70 to 100%).

The electrically conductive composite filaments showed good yarn performance in same level with normal nylon filaments, and their resistivity was 10 to 100 ohm・ cm.

These electrically conductive composite filaments were twisted with nylon yarns of 2600d/140f (mixing rate: 1 : 5) to provide crimped yarn. Every other ten crimped yarns were subjected to tufting, and crimped yarns of nylon 2600/140f were arranged therebetween to prepare a loop pile carpet. This carpet was refined, and was (beige) and a lining was given. The potential of static electricity appearing on a person wearing a pair of leather shoes was measured after walking on the carpet (25°C ; 20% RH). The potential of static electricity was -2,000 to -2,500 volts. These figures show that the product has good destaticizing properties.

Comparison Example 1

Titanium oxide particles were coated with tin oxide containing antimony oxide of 10%. When electrically conductive particles (mean particle size : 0.25$\mu$ m, and electrically conductive metallic oxide content : about 15%) were compressed at 200kg/cm$^2$, the resistivity was 4 ohm・ cm.

Then, electrically conductive composite filaments were produced in the similar way as in Application Example 31, although taking no core-and-sheath form (the resistivity of electrically conductive component ranging from 50 to 500 ohm・ cm). A loop pile carpet was prepared with use of these filaments.

The potential of static electricity appearing on a person walking on the carpet was determined to be -4,000 to -6,000 volts. It was necessary to arrange electrically conductive composite filaments at the interval of two lines to reduce the potential of static electricity to the same destaticizing degree as in said Application Example 31.

(III) The present invention will be explained with reference to some Test Examples of antibacterial products. The symbol "%" in following Examples is equivalent to "percent by weight".

Test Examples 1 - 6 and Comparison Example 2

Following ingredients were mixed and kneaded well to provide a fluid mixture:

Polycondensate of adipic acid and diethylene glycol (viscosity : 800cp at 75°C , and molecular weight : 16,000) 55 %; and

Pulverized barium sulfate coated with silver or copper (coating amount : 5.0%, and mean particle size : 0.9$\mu$ m) 45%.

The mixture was extruded from a melt spinning head and composed with molten nylon 6 polymer with polymerization degree of 180 at the blending rate given in Table 18. The blend was spun at the rate of 1,200 meters per minute to provide 24 filaments, each of 224 denier (unstretched, and weighing 6 kg). These filaments were subjected to stretching-and-twisting operation to prepare yarns which was knitted. Pieces of knitting (5 x 5 cm$^2$) were subjected to antibacterial test.

(Particulars of Antibacterial Test)

Pieces of knitting (5 x 5 cm$^2$) were wetted with a buffer for Staphylococcus aureus or Klebsiella pneumonia, and these wet pieces of knitting were put in a closed container. The container was shaken at 150 times per minute for 1 hour, and then the number of living bacteria was counted to determine the bacteria reduction rate of the survival-to-initial bacterial population.

(Judgement of Spinning Workability)

A spinning workability was judged based on factors of filtration pressure, single yarn breaking or discontinuance, multi-yarn breaking discontinuance and others, when the yarn(s) were prepared under the conditions as described in Production Examples. The total evaluation were given in four grades marked ⊚ , ○ , △ and × .

The judgement of coloring was made by visual observation and was given in four grade system.

As seen from Table 18, the antibacterial properties of test samples according to the invention were found to be superior to those of control samples obtained by Comparison Examples.

Table 18

| Test No. | additive amount of barium sulfate coated with metal (%) | spinning workability | coloring | bacteria reduction rate (%) | |
|---|---|---|---|---|---|
| | | | | Staphylococcus aureus | Klebsiella pneumoniae |
| test example 1 | Ag 0.5 | ◎ | ◎ | 85 | 93 |
| test example 2 | Ag 1.0 | ◎ | ◎ | 88 | 99 |
| test example 3 | Ag 2.0 | ◎ | ◎ | >99 | >99 |
| test example 4 | Ag 4.0 | ○ | ◎ | >99 | >99 |
| test example 5 | Ag 8.0 | △ | ○ | >99 | >99 |
| test example 6 | Cu 2.0 | ◎ | ◎ | >99 | >99 |
| comparison example 2 | 0 | ◎ | ◎ | 0 | 0 |

Test Example 7

Yarns of Production Example 3 were knitted, and pieces of knitting were washed 5, 10 and 20 times by a washing machine for home use. As seen from following Table 19, good antibacterial properties were retained after washing 20 times.

30

## Table 19

| washing times | bacteria reduction rate (%) | |
|---|---|---|
| | Staphylococc-us aureus | Klebsiella pneumoniae |
| 0 | >99 | >99 |
| 5 | >99 | 98 |
| 10 | 97 | 97 |
| 20 | 97 | 96 |

(Particulars of Washing)

A small-sized electric washing machine commercially available was used.

| | |
|---|---|
| Neutral detergent | 1 g/l |
| Bath ratio | 1 : 100 |
| Temperature x time | 40℃ x 5min. |
| Rinsing | 10min. |
| Drying | 80℃ x 1 hour |

Test Examples 8-12 and Comparison Test Examples 3 and 4

An acrylic polymer of acrylonitrile (AN)/methyl acrylate (AM)/sodium metacrylsulfonate (SMAS) in the ratio of 91.2/8.0/0.8 in dimethylformamide (DMF) was prepared.

Barium sulfate particles (mean particle size : $0.9\mu$ m) coated with antibacterial metals which were given in Table 20 together with amount thereof were dispersed in DMF, and then the dispersion was added to and mixed with the above described acrylic polymer solution by a homomixer to provide a spinning solution.

The spinning solution was discharged through a nozzle in a 60% DMF at 20 °C , and the resulting filaments were desolvated, stretched and rinsed. Then, lubricant was added to the fibers thus treated, and the fibers were dried for densification. The fibers were crimped, and then the so crimped fibers were subjected to a heat-and-humidity treatment at 120 °C . The fibers were and spun, and then the yarns were knitted. Pieces of knitting or cloth weighing 1.5g (about 3 x 5 cm) were subjected to an antibacterial test, as test samples.

An acrylonitrile polymer containing no antibacterial particles or acrylonitrile polymers containing antibacterial metal coated barium sulfate in amounts which were different from those in Production Examples above described, were used as control samples.

As seen from Table 20, test samples were found to be superior to control samples.

Table 20

| Test No. | coating metals (%) | additive amount of barium sulfate coated with metal (%) | spinning workability | coloring | bacteria reduction rate (%) | |
|---|---|---|---|---|---|---|
| | | | | | Staphylococcus aureus | Klebsiella pneumoniae |
| test example 8 | Ag (3.0) | 1.0 | ◎ | ◎ | 88 | 93 |
| test example 9 | Ag (5.0) | 0.5 | ◎ | ◎ | 87 | 89 |
| test example 10 | Ag (10.0) | 0.5 | ◎ | ◎ | 95 | 91 |
| test example 11 | Cu (7.0) | 2.0 | ○ | ◎ | >99 | >99 |
| test example 12 | Ag (15.0) | 2.0 | ○ | ○ | >99 | >99 |
| comparison example 3 | 0 | 2.0 | ○ | ◎ | 0 | 0 |
| comparison example 4 | Ag (3.0) | 12.0 | × | — | — | — |

EP 0 427 858 A1

33

Test Example 13

An acrylic copolymer solution of acrylonitrile (AN)/vinylidene chloride (VCl)/sodium allyl sulfonate (SAS) in the ratio of 57/40/3 in DMF was prepared.

Barium sulfate particles coated with silver of 5% were prepared and treated by a sand grinder. The antibacterial metal-coated barium particles were dispersed evenly in the acrylic copolymer solution so as to contain such antibacterial particles of 1.0%, to prepare a spinning solution.

The spinning solution was discharged through a nozzle in 55% DMF at 25°C , and the resulting filaments were desolvated, stretched and rinsed. Then, lubricant was added to the fibers thus treated, and the fibers were dried for densification. The fibers were crimped, and then the so crimped fibers were subjected to a heat-and-humidity treatment at 115 °C . The fibers were knitted. After washing 5, 10 and 20 times by an electrical washing machine for home use, pieces of knitting or cloth were subjected to antibacterial test, as test samples.

As seen from Table 21, Production Examples were found to retain good antibacterial properties.

Table 21

| washing times | bacteria reduction rate (%) | |
| --- | --- | --- |
| | Staphylococcus aureus | Klebsiella pneumoniae |
| 0 | >99 | >99 |
| 5 | >99 | 98 |
| 10 | 97 | 97 |
| 20 | 96 | 98 |

Test Example 14

The following ingredients were kneaded to provide a fluid mixture:

A polycondensate of adipic acid of 472 parts, diethylene glycol of 160 parts and 2-ethylhexyl alcohol of 168 parts (acid value: 1.0, viscosity: 1000cp, and molecular weight: 1000) 55 %; and

Barium sulfate particles coated with silver (coating amount: 5.0%, and mean particle size: $0.9\mu$ m) 45 %.

A span bond producing apparatus used comprised: an ejection arrangement of 240 ejection apertures (0.40mm in diameter) arranged in two lines at the interval of 3mm; a nozzle piece having 250 heating gas jetting apertures arranged on the opposite sides of the ejection arrangement; and a catch screen reciprocally traversing to catch the fleece of fibers at a distance of 20 cm below the nozzle piece.

The above described fluid mixture of 4 parts was added to and composed with a molten polymer of polyethylene terephtalate of 96 parts with extreme viscosity of 0.65, to provide unwoven fabric (single yarn fineness: about 1d, width: 140 m, and weight per unit area: 100 g/m$^2$)

Four pieces of the unwoven fabric (5 x 5 cm$^2$) were subjected to antibacterial test to find that these pieces had good antibacterial @performance.

Test Example 15

4 parts of calcium carbonate particles coated with silver (coating amount: 3.0 %, and average particle size: 1.3 $\mu$ m) and 96 parts of low density polyethylene were kneaded together by using a Banbury mixer, and then a 40 $\mu$ m thick film was prepared according to an inflation process.

Pieces of the film (5 x 5 cm$^2$) were subjected to antibacterial test to find that these pieces had good antibacterial performance. The film product may be advantageously used, for instance, as food wrapping material.

Test Examples 16 - 21 and Comparison Test Example 5

Filaments were prepared in the similar way as in Test Example 1 although titanium dioxide particles were used as carriers of antibacterial metals, such as silver and copper (mean particle size: 1.0$\mu$ m) in place of barium sulfate in Test Example 1. The filaments or yarns were knitted and the resulting pieces of knitting were subjected to an antibacterial test.

Results of the antibacterial test were given in following Table. The test samples were found to be superior to control samples in antibacterial properties.

Table 22

| Test No. | additive amount of barium sulfate coated with metal (%) | spinning workability | coloring | bacteria reduction rate (%) | |
|---|---|---|---|---|---|
| | | | | Staphylococcus aureus | Klebsiella pneumoniae |
| test example 1 | Ag 0.5 | ◎ | ◎ | 76 | 82 |
| test example 2 | Ag 1.0 | ◎ | ◎ | 80 | 87 |
| test example 3 | Ag 2.0 | ◎ | ◎ | >99 | >99 |
| test example 4 | Ag 4.0 | ○ | ◎ | >99 | >99 |
| test example 5 | Ag 6.0 | △ | ○ | >99 | >99 |
| test example 6 | Cu 2.0 | ◎ | ◎ | >99 | >99 |
| comparison example 2 | 0 | ◎ | ◎ | 0 | 0 |

Test Example 22

Pieces of knitting in Test Example 18 were subjected to an antibacterial test in the similar way as in Test Example 7. Results of the test were given in Table 23. As seen from the Table, these pieces retained good antibacterial properties after being washed 20 times.

Table 23

| washing times | bacteria reduction rate (%) | |
| :---: | :---: | :---: |
| | Staphylococcus aureus | Klebsiella pneumoniae |
| 0 | >99 | >99 |
| 5 | >99 | 98 |
| 10 | 96 | 97 |
| 20 | 92 | 94 |

Test Examples 23 - 27 and Comparison Test Examples 6 - 7

Filaments were prepared in the similar way as Test Examples 8 to 12 and Comparison Samples 3 and 4" although titanium dioxide particles (mean particle size: 1.0 $\mu$ m) were used as carriers of silver. The filaments or yarns were knitted and the resulting pieces of knitting were subjected to an antibacterial test.

Results of the antibacterial test were given in Table 24. Test samples were found to be superior to control samples samples in antibacterial properties.

Table 24

| Test No. | coating metals (%) | additive amount of barium sulfate coated with metal (%) | spinning workability | coloring | bacteria reduction rate (%) | |
|---|---|---|---|---|---|---|
| | | | | | Staphylococcus aureus | Klebsiella pneumoniae |
| test example 23 | Ag (3.0) | 1.0 | ◎ | ◎ | 84 | 90 |
| test example 24 | Ag (5.0) | 0.5 | ◎ | ◎ | 88 | 88 |
| test example 25 | Ag (10.0) | 0.5 | ◎ | ○ | 92 | 91 |
| test example 26 | Cu (7.0) | 2.0 | ○ | ○ | >99 | >99 |
| test example 27 | Ag (15.0) | 2.0 | ○ | △ | >99 | >99 |
| comparison example 6 | 0 | 2.0 | ○ | ◎ | 0 | 0 |
| comparison example 7 | Ag (3.0) | 12.0 | × | — | ———— | ———— |

EP 0 427 858 A1

Test Example 28

An acrylic copolymer solution of acrylonitrile (AN)/vinylidene chloride ($VCl_2$)/sodium allyl sulfonate (SAS) in the ratio of 57/40/3 in DMF was prepared.

Titanium dioxide particles coated with silver of 5% were prepared and treated by a sand grinder. An antibacterial metal-coated barium particles were dispersed evenly in the acrylic copolymer solution so as to contain such antibacterial particles of 1.0% to prepare a spinning solution. The spinning solution was discharged through a nozzle in 55% DMF at 25°C, and the resulting filaments were desolvated, and stretched and rinsed. Then, lubricant was added to the fibers thus treated, and the fibers were dried for densification. The fibers were crimped, and then the so crimped fibers were subjected to a heat-and-humidity treatment at 115°C.

The fibers were knitted. After washing 20 times, pieces of knitting or cloth were subjected to an antibacterial test. As seen from Table 25, Test samples were found to retain good antibacterial performance.

Table 25

| washing times | bacteria reduction rate (%) | |
|---|---|---|
| | Staphylococcus aureus | Klebsiella pneumoniae |
| 0 | 98.5 | >99 |
| 5 | 99 | 98.5 |
| 10 | 95.2 | 97 |
| 20 | 94.7 | 98 |

Possible Use for Industrial Purposes

Antibacterial or electrically conductive compositions according to the invention may be advantageously used in producing synthetic filaments, synthetic films, synthetic massive articles.

It is unnecessary to modify existing equipments or installation to produce antibacterial or electrically conductive articles by using the antibacterial or electrically conductive compositions according to the invention.

**Claims**

1. An antibacterial composition, characterized in that inorganic fine particles are coated with an antibacterial metal and/or antibacterial metal compound.

2. An antibacterial composition according to Claim 1, wherein said antibacterial metal is at least one selected from the group consisting of silver, silver oxide, silver chloride, copper, copper oxide, zinc, lead, bismuth, cadmium, chrome and mercury.

3. An antibacterial composition according to Claim 1, wherein said inorganic fine particles is at least one material selected from the group consisting of a metal oxide, metal salt, zeolite, diatomaceous earth, mica, kaolin, talc and silica gel.

4. An antibacterial composition according to Claim 1, wherein said antibacterial metal is at least one selected from the group consisting of gold, silver, aluminum, tin, nickel, iron and stainless steel, and has also an electrical conductivity.

5. An antibacterial composition according to Claim 1, wherein said inorganic fine particles have mean particle size of 0.1 to 5$\mu$ m.

6. An antibacterial composition according to Claim 1, wherein a coated amount of said antibacterial metal is 0.1 to 20% by weight based on the inorganic fine particle.

7. An antibacterial composition according to Claim 3, wherein said metal oxide is at least one selected from the group consisting of titanium oxide and alumina.

8. An antibacterial composition according to Claim 3, wherein said the metal salt is at least one selected from the group consisting of barium sulfate, calcium carbonate, lithopone and white lead.

9. An antibacterial composition according to Claim 4, wherein a coated amount of said antibacterial metal is at least 25% by weight of the total ccmposition.

10. An antibacterial polymer composition, characterized in that it comprises inorganic fine particles coated with an antibacterial metal.

11. An antibacterial polymer composition according to Claim 10, wherein said antibacterial metal is at least one selected from the group consisting of silver, copper and zinc.

12. An antibacterial polymer composition according to Claim 10, wherein said inorganic fine particles is at least one selected from the group consisting of a metal and metal salt.

13. An antibacterial polymer composition according to Claim 10, wherein a coated amount of said antibacterial metal is 0.1 to 20% by weight based on the inorganic fine particle.

14. An antibacterial polymer composition according to Claim 10, wherein mean particle size of said inorganic fine particles coated with said antibacterial metal is 0.1 to 5$\mu$ m.

15. An antibacterial polymer composition according to Claim 10, wherein said synthetic polymer is at least one selected from the group consisting of polyamide, polyester, polyolefin, polyurethane and acrylonitric polymer.

16. An antibacterial polymer composition according to Claim 12, wherein said metal oxide is at least one selected from the group consisting of titanium oxide and alumina.

17. An antibacterial polymer composition according to Claim 12, wherein said metal salt is at least one selected from the group consisting of barium sulfate, calcium carbonate, lithopone and white lead.

18. A method of producing antibacterial articles, characterized in that it comprises the steps of: adding a fluid mixture of a dispersion medium and inorganic fine particles coated with an antibacterial metal to a molten synthetic polymer to mix the same, and shaping the resulting mixture into the article.

19. A method of producing antibacterial articles according to Claim 18, wherein mean particle size of said inorganic fine particles to be coated with antibacterial metal is 0.1 to 5$\mu$ m, and metal coated fine particles is added to said synthetic polymer in an amount of 0.1 to 20% by weight based on the latter.

20. A method of producing antibacterial articles according to Claim 18, wherein said shaping is carried out according to a melt spinning method to make a fiber.

21. A method of producing antibacterial articles, characterized in that it comprises the steps of: adding inorganic fine particles coated with an antibacterial metal to a synthetic polymer solution, mixing the materials, and shaping the mixture into the article.

22. A method of producing antibacterial articles according to Claim 21, wherein said mixture blend is shaped into a fiber form according to a melt or dry spinning method.

23. An electrically conductive composition, characterized in that inorganic fine particles are coated with electrically conductive metal in an amount of 25% by weight or more based on the inorganic fine particle.

24. An electrically conductive composition according to Claim 23, wherein said electrically conductive coating metal is at least one selected from the group consisting of gold, silver, copper, aluminum and nickel.

25. An electrically conductive composition according to Claim 23, wherein said electrically conductive coating is composed of underlying coating of a metal selected from the group consisting of nickel, copper and aluminum, and overlying coating of a metal selected from the group consisting of gold and silver.

26. An electrically conductive composition according to Claim 23, wherein said inorganic fine particles are made of at least one selected from the group consisting of a metallic oxide, barium sulfate and calcium carbonate.

27. An electrically conductive composition according to Claim 23, wherein said inorganic fine particles have mean diameter of $2\mu$ m or more less.

28. An electrically conductive composition according to Claim 26, wherein said metallic oxide is at least one selected from the group consisting of titanium oxide and alumina.

29. An electrically conductive polymer composition, characterized in that it comprises inorganic fine particles coated with electrically conductive metal, and a synthetic polymer.

30. An electrically conductive article, characterized in that it contains electrically conductive polymer composition of Claim 29 as at least one component.

31. An electrically conductive article according to Claim 30, wherein said article is selected from the group consisting of a fiber, film, painted membrane and injection molding.

32. A fibrous article, characterized in that it comprises the fiber of Claim 31.

# INTERNATIONAL SEARCH REPORT

International Application No PCT/JP90/00243

## I. CLASSIFICATION OF SUBJECT MATTER (if several classification symbols apply, indicate all) [6]

According to International Patent Classification (IPC) or to both National Classification and IPC

Int. Cl$^5$      A01N25/08

## II. FIELDS SEARCHED

| Minimum Documentation Searched [7] | |
|---|---|
| Classification System | Classification Symbols |
| IPC | A01N25/08, A01N59/16, A01N59/18, A01N59/20, C08K3/08, C08K3/10, C08K3/22, C08K3/26 |

| Documentation Searched other than Minimum Documentation to the Extent that such Documents are Included in the Fields Searched [8] |
|---|
|  |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 59-133235 (Kanebo, Ltd., and another), 31 July 1984 (31. 07. 84), Scope of claim 1 to 18, lines 11 to 17, lower left column, page 2; lines 9 to 18, lower right column, page 3 and line 19, upper right column to line 11, lower left column; page 3 & EP, B, 116865 & US, A, 4775585 | 1 - 6, 9 - 15, 18 - 22 |
| X | JP, A, 63-88109 (Johnson Matthey Public Limited Co.)., 19 April 1988 (19. 04. 88), Scope of claim 1 to 10, lines 16 to 18, upper right column; page 2 & EP, A, 251783 | 1 - 14, 16, 17 |
| X | JP, B2, 1-22365 (Kanebo, Ltd.), 26 April 1989 (26. 04. 89), Scope of claim 1 to 3 and line 34, left column to line 2, right column; page 2 & US, A, 4420534 | 23 - 32 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 18, 1990 (18. 05. 90) | June 4, 1990 (04. 06. 90) |
| International Searching Authority | Signature of Authorized Officer |
| Japanese Patent Office | |

Form PCT/ISA/210 (second sheet) (January 1985)